# EUROPEAN PATENT APPLICATION

(11) **EP 4 772 838 A1**
(43) Date of publication of application: **08.07.2026**
(21) Application number: 25221406.9
(22) Date of filing: 08.12.2025
(51) Int. Cl.: G01C 23/00

(54) **SYSTEM AND METHOD FOR A NAVIGATIONAL DISPLAY**

(30) Priority: 02.01.2025 US 202519007925
(71) Applicant: Honeywell International Inc., Charlotte, NC 28202 (US)
(72) Inventor: HE, Gang, Charlotte, 28202 (US); HE, Ye, Charlotte, 28202 (US); HE, Zuowei, Charlotte, 28202 (US); QIN, Zhihao, Charlotte, 28202 (US)
(74) Representative: Ingrassia, Fisher & Lorenz UK Ltd.

(57) **Abstract**

A system is disclosed that provides a navigational display for an aerial vehicle. The system includes: a display device for the aerial vehicle; and a controller configured to generate a navigational display window configured to assist with landing operations. The navigational display window is configured to display on the display device: a view of an environment in front of the aerial vehicle; a landing target symbol that represents an intended landing location at which the aerial vehicle is intended to achieve a full stop above the intended landing location; and a real time stop indicator that indicates a predicted aerial vehicle stopping point if a current deceleration rate is maintained.

## Description

### TECHNICAL FIELD

The technical field generally relates to the field of navigation, and more particularly relates to systems and methods for providing three-dimensional navigational aids on aerial vehicle displays.

### BACKGROUND

Navigational displays may provide integrated maps that display strategic information such as flight plans, airways, approach procedures, and traffic and weather. Further improvements are needed to increase a pilot/operator situational awareness and decrease workload for operating an aerial vehicle.

Hence, it is desirable to provide systems and methods for providing navigational aids on aerial vehicle displays. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In some aspects, the techniques described herein relate to a system for providing a navigational display for an aerial vehicle, including: a display device for the aerial vehicle; and a controller configured to generate a navigational display window configured to assist with landing operations, the navigational display window configured to display on the display device: a view of an environment in front of the aerial vehicle; a landing target symbol that represents an intended landing location at which the aerial vehicle is intended to achieve a full stop above the intended landing location; and a real time stop indicator that indicates a predicted aerial vehicle stopping point if a current deceleration rate is maintained.

In some aspects, the techniques described herein relate to a method, including: providing a navigational display window on a display device for an aerial vehicle; providing a view of an environment in front of the aerial vehicle on the navigational display window; positioning a landing target symbol on the navigational display window that represents an intended landing location at which the aerial vehicle is intended to achieve a full stop before descending to land; and positioning a real time stop indicator on the navigational display window that indicates a predicted aerial vehicle stopping point if a current deceleration rate is maintained.

In some aspects, the techniques described herein relate to a system for providing a landing position display for a vertical takeoff and landing aircraft (VTOL aircraft), including: a display device in a cockpit of the VTOL aircraft; and a synthetic view window configured for display on the display device, the synthetic view window configured to display: a 3-D synthetic view display of a flight path for the VTOL aircraft; a 2-D map display of the flight path for the VTOL aircraft overlaid over a portion of the 3-D synthetic view display; a stopping arc symbol on the 3-D synthetic view display that indicates a stopping radius for the VTOL aircraft if deceleration were initiated at a planned deceleration rate; a second stopping arc symbol on the 2-D map display that indicates a stopping radius for the VTOL aircraft if deceleration were initiated at the planned deceleration rate; a landing target symbol positioned on the 3-D synthetic view display that indicates a target landing location; and a second landing target symbol positioned on the 2-D map display that indicates the target landing location; wherein an intersection of the stopping arc symbol with the landing target symbol provides an indication to begin deceleration using the planned deceleration rate.

Furthermore, other desirable features and characteristics will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram depicting an example system environment in which systems, methods, and other aspects of the present disclosure may be implemented, according to various embodiments.
FIG. 2 is a block diagram depicting an example navigational display system, according to various embodiments.
FIG. 3 is a diagram depicting an example navigational display window for a VTOL vehicle, according to various embodiments.
FIG. 4 is a diagram depicting another example navigational display window for a VTOL, according to various embodiments.
FIG. 5A is a diagram depicting another example navigational display window for a VTOL vehicle, according to various embodiments.
FIG. 5B is a diagram depicting an example hover height symbol, according to various embodiments.
FIG. 6A is a diagram depicting another example navigational display window for a VTOL vehicle, according to various embodiments.
FIG. 6B is a diagram depicting an example hover height symbol, according to various embodiments.
FIG. 7 is a diagram depicting an example moving map display for a VTOL vehicle, according to various embodiments.
FIG. 8 is a diagram depicting another example navigational display window for a VTOL vehicle, according to various embodiments.
FIG. 9 is a diagram depicting example states of a real time stop indicator displayed in an HSI, according to various embodiments.
FIG. 10A depicts an example horizontal situation indicator for a VTOL, according to various embodiments.
FIG. 10B is a diagram illustrating the application of a zoom feature to the example HSI of FIG. 10A, according to various embodiments.
FIG. 11 is a process flow chart depicting an exemplary method, according to various embodiments.
FIG. 12 is a process flow chart depicting an exemplary method, according to various embodiments.
FIG. 13 is a process flow chart depicting an exemplary method, according to various embodiments.

### DETAILED DESCRIPTION

The following detailed description is merely exemplary in nature and is not intended to limit the invention or the application and uses of the invention. As used herein, the words "exemplary" and "example" mean "serving as an example, instance, or illustration." Thus, any embodiment described herein as "exemplary", or "example" are not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

While this disclosure describes the systems and methods with reference to aircraft, it should be appreciated that the present systems and methods may be applicable to various other vehicles, including those of drones, automobiles, ships, spacecraft, or any other manned, unmanned, autonomous, and/or internet-connected vehicles.

The provided system and method may be separate from, or integrated within, a preexisting mobile platform management system, avionics system, or aircraft flight management system (FMS).

For large scale deployment of UAM (Urban Air Mobility)/AAM (Advanced Air Mobility) types of vehicles in an urban operation environment, a simplified pilot / operator HMI is desired to intuitively show aircraft current conditions relative to an intended point of hover and landing, allowing pilot/operator easy understanding of the vehicle state for monitoring and control. In various embodiments, a set of 2-D and 3-D simplified display method are provided to help a pilot or remote controller to be aware: of current vehicle energy status that indicate for AAM vehicles a predicted stop point and height over an intended hover landing point along a direction or defined flight path; that a predicted landing location is well beyond a current intended landing location; that current vehicle performance or capabilities will not allow a successful hover to landing; of points along a planned path for pilot / operator to initiate deceleration or go around operation to ensure safe approach and landing.

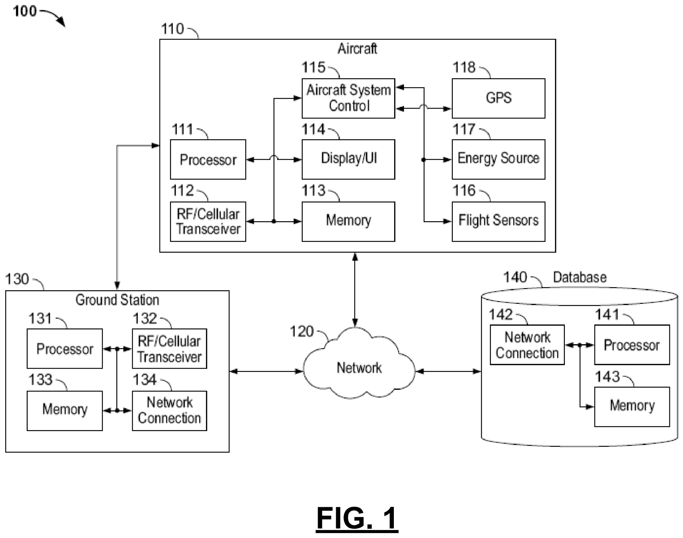

FIG. 1 is a block diagram depicting an example of a system environment 100 in which systems, methods, and other aspects of the present disclosure may be implemented. The system environment 100 of FIG. 1 may include an aircraft 110, a network 120, one or more ground stations 130, and a database 140. Aircraft 110 may include processor 111 in communication with a plurality of other components such as RF/cellular transceiver 112, memory 113, display/user interface (UI) 114, aircraft control system 115, flight sensors 116, energy source 117, and GPS 118. Processor 111 may include one or more processors that comprise the computing and flight management systems of aircraft 110. Memory 113 may be one or more components configured to store data related to aircraft 110, including instructions for operating flight components and aircraft systems (e.g., autopilot, route planning, communication). Processor 111 and memory 113 may display information to and receive inputs from an operator of the aircraft 110 via the display/Ul 114. The display/Ul 114 may include any suitable type, such as one or more monitors, touchscreen panels, heads-up displays, heads-down displays, primary flight displays (PFDs), navigation displays, and others, and may include operator input devices such as joysticks, buttons, touch-responsive panels, mice, trackpads, voice recognition devices, and the like.

The aircraft 110 can include an aircraft control system 115 to serve as the controller of flight components and aircraft systems (e.g., control surfaces, propulsion, energy generation/management). In some embodiments, the aircraft control system 115 may communicate with a GPS 118 to, for example, locate the aircraft 110 in the airspace; an energy source 117 to, for example, manage aircraft range and speed; and flight sensors 116 to, for example, monitor the operating and flight characteristics of aircraft 110. Without deviating from the scope of this disclosure, the aircraft 110 may have additional elements that can be in communication with the aircraft control system 115 and/or processor 111.

The aircraft 110 may use an RF/cellular transceiver 112 to communicate with other elements of the system environment, for example, via the network 120 or directly by radio communication. The network 120 may be implemented as, for example, the Internet, a wireless network, Bluetooth, Near Field Communication (NFC), or any other type of network or combination of networks that provides communications between one or more components of the system environment 100. In some embodiments, the network 120 may be implemented using a suitable communication protocol or combination of protocols such as a wired or wireless Internet connection in combination with a cellular data network.

To aid and/or guide the aircraft 110, one or more ground stations 130 may provide the aircraft 110 with information, such as information regarding air traffic, weather conditions, and/or other useful information for the flight of aircraft 110. A ground station 130 may include a processor 131, an RF/cellular transceiver 132, memory 133, and network connection 134. Processor 131 and memory 133 may collect and transmit information via RF/cellular transceiver 132 and/or network connection 134. Ground station 130 may be in communication with, for example, air traffic control, meteorologists, and one or more databases 140.

One or more databases 140 may be repositories for system information such as map data, building data, flight plan data, and the like. Database 140 may include a processor 141, a network connection 142, and a memory 143. Memory 143 may store data, processor 141 may access and organize the stored data to respond to requests and provide updates to the stored data, and information may be provided to other elements in system environment 100 via network connection 142. In some embodiments, database 140 may communicate directly with aircraft 110 via network 120. Further, ground station 130 may be able to relay requests for information from aircraft 110 to database 140 via one or more of its RF/cellular transceivers 132 and network connection 134.

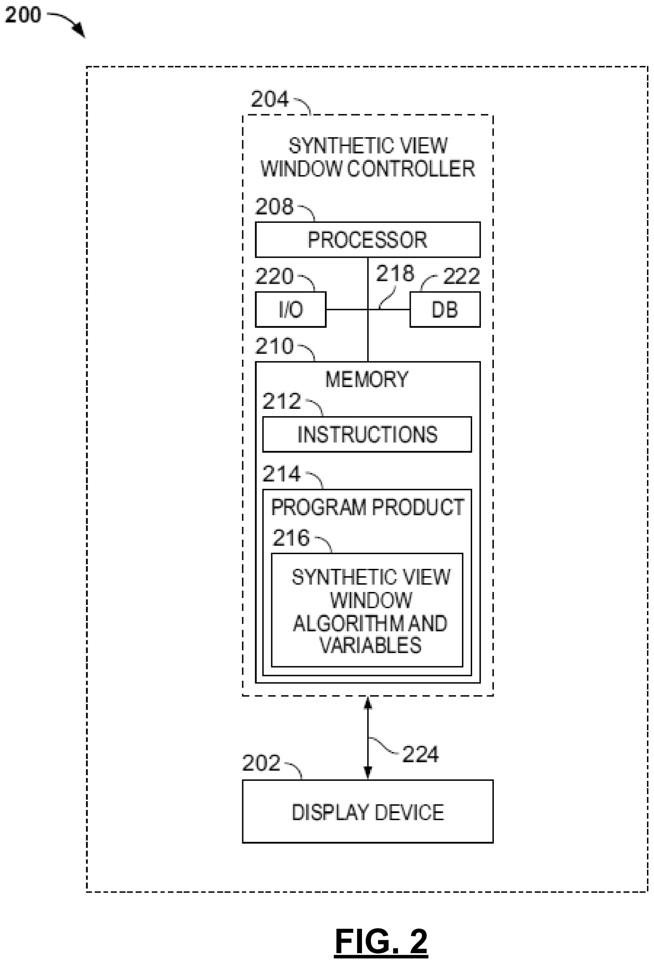

FIG. 2 is a block diagram depicting an example navigational display system 200 on an aerial vehicle such as a VTOL aircraft, according to various embodiments. An aerial vehicle may comprise an urban air mobility (UAM) vehicle, such as an eVTOL (electric Vertical Take-off and Landing vehicle), a VTOL (Vertical Take-off and Landing vehicle), a UAV (Unmanned Aerial Vehicle), drones, and others. A VTOL may comprise a helicopter, a manned vehicle, an unmanned vehicle, and others.

The example navigational display system 200 includes a display device 202 (such as a primary flight display (PFD), a portable electronic device (PED), such as a laptop computer, tablet computer, smartphone, or other PED, and/or other display/Ul 114) and a navigational display controller 204. The display device 202 has at least one display unit and at least one user input mechanism. In various embodiments, the display device 202 includes a touchscreen device having at least one touchscreen display as a display unit and a touchscreen surface as a user input mechanism. In various embodiments, the display device 202 includes a mouse and/or keyboard as user input mechanisms. In various embodiments, the display device 202 may include other physical controls, such as knobs, wheels, inceptors, sticks, or others.

The example navigational display controller 204 includes a processing component comprising at least one processor 208 and a computer-readable storage device or media (such as memory 210) encoded with programming instructions for configuring the processing component. The processor 208 may comprise any type of processor or multiple processors, any custom-made or commercially available processor, a central processing unit (CPU), a graphics processing unit (GPU), an application specific integrated circuit (ASIC), a field programmable gate array (FPGA), an auxiliary processor among several processors associated with the processing component, a semiconductor-based microprocessor (in the form of a microchip or chip set), any combination thereof, or generally any device for executing instructions to carry out the described operations, tasks, and functions by manipulating electrical signals representing data bits at memory locations in system memory, as well as other processing of signals.

The computer readable storage device or media (e.g., memory 210) may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the processing component. The memory 210 may be located on and/or co-located on the same computer chip as the processor 208. Generally, the memory 210 maintains data bits and may be utilized by the processor 208 as storage and/or a scratch pad during operation. Specifically, the memory 210 stores instructions and applications 212. Information in the memory 210 may be organized and/or imported from an external source during an initialization step of a process; it may also be programmed via a user input device (e.g., associated with the Display device 202). During operation, the processor 208 loads and executes one or more programs, algorithms and rules embodied as instructions and applications 212 contained within the memory 210 and, as such, controls the general operation of the navigational display controller 204.

The memory 210 includes a novel program 216 that includes rules and instructions that, when executed, convert the processing component (e.g., processor 208/memory 210) configuration into the navigational display controller 204, which is a novel controller that performs the functions, techniques, and processing tasks associated with generating and causing a synthetic view window to be displayed on the display device 202. The novel program 216 may be configured to cause the navigational display controller 204 to generate a navigational display window configured to assist with landing operations, wherein the navigational display window is configured to display on the display device 202: a view of an environment in front of the aerial vehicle, a landing target symbol that represents an intended landing location at which the aerial vehicle is intended to achieve a full stop above the intended landing location, and a real time stop indicator that indicates a predicted aerial vehicle stopping point if a current deceleration rate is maintained. The novel program 216 and associated stored variables may be stored in a functional form on computer readable media, for example, as depicted, in memory 210. While the depicted exemplary embodiment of the GCS controller is described in the context of a fully functioning computer system, those skilled in the art will recognize that the mechanisms of the present disclosure are capable of being distributed as a program product 214.

As a program product 214, one or more types of non-transitory computer-readable signal bearing media may be used to store and distribute the program 216, such as a non-transitory computer readable medium bearing the program 216 and containing therein additional computer instructions for causing a computer processor (such as the processor 208) to load and execute the program 216. Such a program product 214 may take a variety of forms, and the present disclosure applies equally regardless of the type of computer-readable signal bearing media used to carry out the distribution. Examples of signal bearing media include recordable media such as floppy disks, hard drives, memory cards and optical disks, and transmission media such as digital and analog communication links. It will be appreciated that cloud-based storage and/or other techniques may also be utilized as memory 210 in certain embodiments.

In various embodiments, the processing component (e.g., processor 208/memory 210) configuration of the navigational display controller 204 may be communicatively coupled (via a bus 218) to an input/output (I/O) interface 220, and a database 222. The bus 218 serves to transmit programs, data, status and other information or signals between the various components of the navigational display controller 204. The bus 218 can be any suitable physical or logical means of connecting computer systems and components. This includes, but is not limited to, direct hardwired connections, fiber optics, infrared and wireless bus technologies.

The I/O interface 220 enables intra controller communication, as well as communication between the navigational display controller 204 and other system components (such as a display device 202) via the communication system and fabric 224 and between the navigational display controller 204 and external data sources via the communication system and fabric 224. The I/O interface 220 may include one or more network interfaces and can be implemented using any suitable method and apparatus. In various embodiments, the I/O interface 220 is configured to support communication from an external system driver and/or another computer system. In one embodiment, the I/O interface 220 is integrated with the communication system and fabric 224 and obtains data from external data source(s) directly. Also, in various embodiments, the I/O interface 220 may support communication with technicians, and/or one or more storage interfaces for direct connection to storage apparatuses, such as the database 222. In some embodiments, the database 222 is part of the memory 210. In various embodiments, the database 222 is integrated, either within the navigational display controller 204 or external to it.

To simplify VTOL vehicle operations, it is advantageous to construct pilot displays with reduced mental workload, particularly for final approach landing operations. This is especially true for short duration flights and flights in complex urban environments.

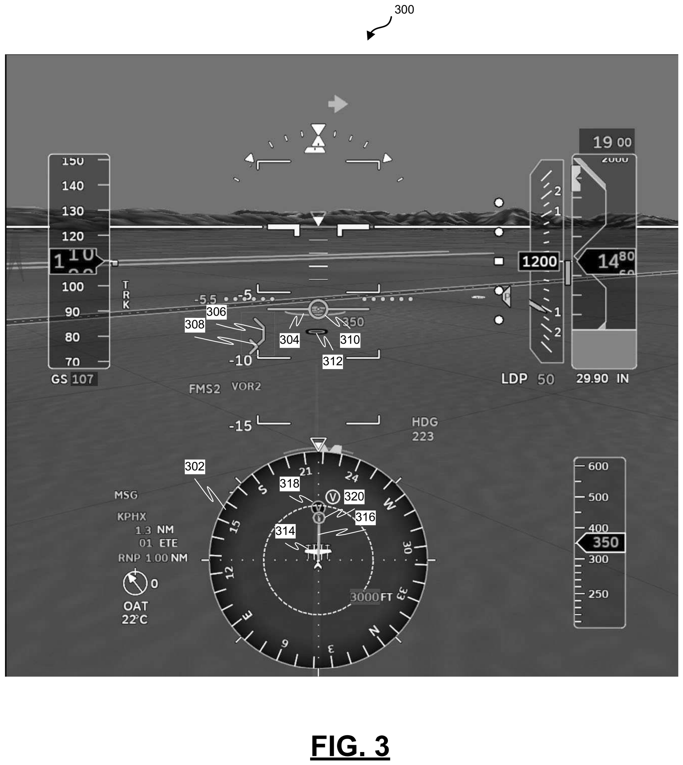

FIG. 3 is a diagram depicting an example navigational display window 300 for a VTOL (e.g., an urban air mobility (UAM) vehicle, a helicopter or other vertical takeoff and landing aircraft), according to various embodiments. The example navigational display window 300 is configured to provide a view of an environment in front of an aircraft that is overlaid with various navigational aids. In various embodiments, the navigational display window 300 may include a three-dimensional (3-D) synthetic view window that provides a 3-D view of the environment in front of the aircraft. The navigational display window 300 may also include a horizontal situation indicator (HSI 302) for a VTOL. The example navigational display window 300 may be generated by the navigational display controller 204 for display on a display device (such as display/UI 114 and/or display device 202).

Example navigational aids for the navigational display window 300 may include a landing target symbol 304 that represents an intended landing location (e.g., vertiport, helipad) at which the aircraft is intended to come to zero speed (i.e., reach a full stop) before touching down, a required acceleration bracket symbol 306 indicates a required deceleration performance to allow the aircraft to come to a full stop above the intended landing location, and a current acceleration chevron symbol 308 that indicates the current deceleration performance of the aircraft.

The example navigational display window 300 further includes a flight path symbol 310 that indicates where the trajectory of the aircraft is pointing, and a real time stop indicator 312 that indicates where the aircraft will stop if the current deceleration rate is maintained. In this example, because the current acceleration chevron symbol 308 is displayed below the required acceleration bracket symbol 306, this symbology indicates to the pilot or flight crew member that the aircraft is undergoing too much deceleration to come to a full stop at the intended landing location - the aircraft will stop (as indicated by the real time stop indicator 312) before reaching the intended landing location.

These symbols on the navigational display window 300 provide a visual display of current aircraft deceleration performance versus required aircraft deceleration performance for landing at an intended landing location. These symbols on the navigational display window 300 can simplify VTOL vehicle operations by reducing mental workload for a pilot or flight crew member, particularly during final approach landing operations.

The example HSI 302 is embedded with a two-dimensional (2-D) map display of the aircraft's anticipated flight path. The example HSI 302 includes an aircraft icon 314 representative of the aircraft, an instantaneous approach vector 316 that is calculated (e.g., based on the speed/acceleration/turn rate of the aircraft), a landing target symbol 318 that represents the intended landing location, and a real time stop indicator 320 that indicates where the aircraft will stop if the current deceleration rate is maintained. These symbols on the HSI 302 provide a visual display of current aircraft deceleration performance versus required aircraft deceleration performance for landing at an intended landing location. These symbols on the HSI 302 can simplify VTOL vehicle operations by reducing mental workload for a pilot or flight crew member, particularly during final approach landing operations.

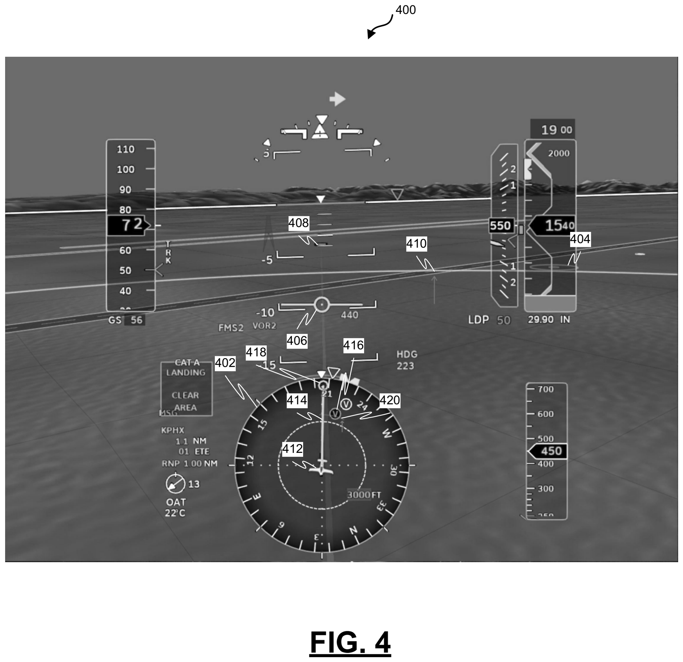

FIG. 4 is a diagram depicting an example navigational display window 400 for a VTOL, according to various embodiments. The example navigational display window 400 is configured to provide a view of an environment in front of an aircraft that is overlaid with various navigational aids. In various embodiments, the navigational display window 400 may include a three-dimensional (3-D) synthetic view window that provides a 3-D view of the environment in front of the aircraft. The navigational display window 400 may also include a horizontal situation indicator (HSI 402) for a VTOL. The example navigational display window 400 may be generated by the navigational display controller 204 for display on a display device (such as display/UI 114 and/or display device 202).

Example navigational aids for the navigational display window 400 may include a landing target symbol 404 that represents an intended landing location (e.g., vertiport, helipad) at which the aircraft is intended to come to zero speed (i.e., reach a full stop) before touching down, a flight path symbol 406 that indicates where the trajectory of the aircraft is pointing, a real time stop indicator 408 that indicates where the aircraft will stop if the current deceleration rate is maintained, and a stopping arc symbol 410 on the ground that indicates locations along the arc where the aircraft will achieve a zero speed (i.e., reach a full stop) if the aircraft begins decelerating at a desired deceleration rate (e.g., a 0.1 G deceleration rate), for example, according to an aircraft flight plan. When the stopping arc symbol 410 intersects the landing target symbol 404, the aircraft can begin to decelerate using the planned deceleration rate to achieve a zero speed (i.e., reach a full stop) above the intended landing location. The stopping arc symbol 410 can indicate to a pilot or flight crew member a point at which to begin deceleration at a planned deceleration rate according to an aircraft flight plan.

The stopping arc symbol 410 can indicate to a pilot or flight crew member to not begin breaking too early. Deceleration may not be necessary at points along a flight path before the points represented by the stopping arc symbol 410. By delaying deceleration, the VTOL may be operated more efficiently and use less energy keeping the vehicle operating in a wing lift mode , thus conserving energy (e.g., battery life).

The stopping arc symbol 410 can also indicate to a pilot or flight crew member to not begin braking too late - some vehicles may not have the ability to stop at an intended stopping location if braking is begun too late resulting in the aircraft overshooting the intended stopping location and putting more stress on the battery. These symbols on the navigational display window 400 can simplify VTOL vehicle operations by reducing mental workload for a pilot or flight crew member, particularly during final approach landing operations, where a pilot is expected to consistently execute, control, or monitor the approach to hover and landing procedures.

The example HSI 402 is embedded with a two-dimensional (2-D) map display of the aircraft's anticipated flight path. The example HSI 402 includes an aircraft icon 412 representative of the aircraft, an instantaneous approach vector 414 that is calculated (e.g., based on the speed/acceleration/turn rate of the aircraft), a landing target symbol 416 that represents the intended landing location, a real time stop indicator 418 that indicates where the aircraft will stop if the current deceleration rate is maintained, and a stopping arc symbol 420 that indicates locations along the arc where the aircraft will achieve a zero speed (i.e., reach a full stop) if the aircraft begins decelerating at a desired deceleration rate (e.g., a 0.1 G deceleration rate), for example, according to an aircraft flight plan.

When the stopping arc symbol 420 intersects the landing target symbol 416, the aircraft can begin to decelerate using the planned deceleration rate to achieve a zero speed (i.e., reach a full stop) above the intended landing location. The stopping arc symbol 420 can indicate to a pilot or flight crew member a point at which to begin deceleration. Certain display attribute changes, for example, line brightness change, may proceed the immediate line interception with the landing target to remind pilot or flight crew of the impending deceleration actions.

The stopping arc symbol 420 can indicate to a pilot or flight crew member to not begin breaking too early. Deceleration may not be necessary at points along a flight path before the points represented by the stopping arc symbol 420. By delaying deceleration, the VTOL may be operated more efficiently and use less energy keeping the vehicle in the air, thus conserving energy (e.g., battery life).

The stopping arc symbol 420 can also indicate to a pilot or flight crew member to not begin braking too late - some vehicles may not have the ability to stop at an intended stopping location if braking is begun too late resulting in the aircraft overshooting the intended stopping location and putting more stress on the battery. These symbols and icons on the HSI 402 can simplify VTOL vehicle operations by reducing mental workload for a pilot or flight crew member, particularly during final approach landing operations.

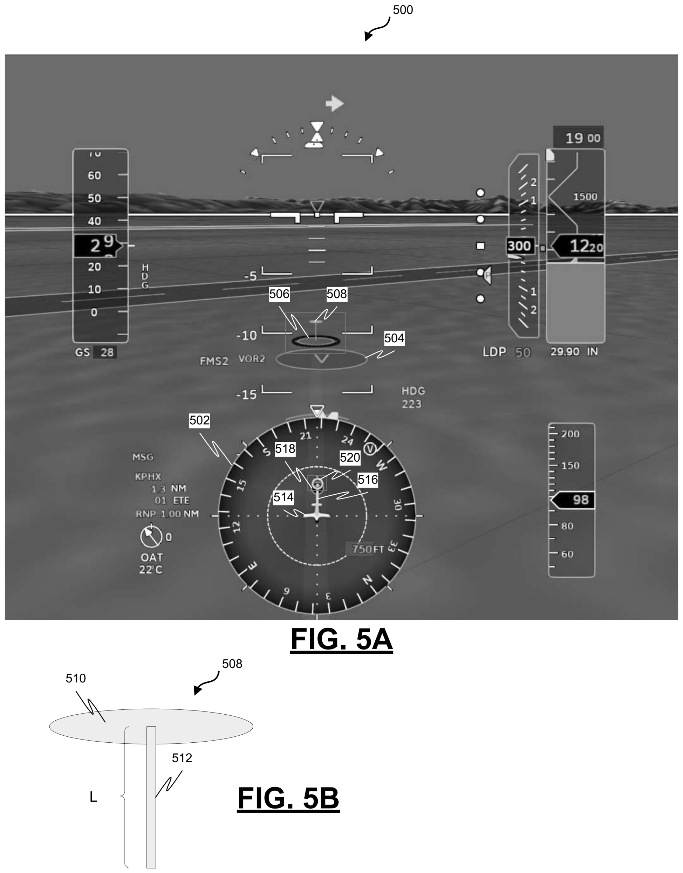

FIG. 5A is a diagram depicting another example navigational display window 500 for a VTOL vehicle, according to various embodiments. The example navigational display window 500 is configured to provide a view of an environment in front of an aircraft that is overlaid with various navigational aids. In various embodiments, the navigational display window 500 may include a three-dimensional (3-D) synthetic view window that provides a 3-D view of the environment in front of the aircraft. The navigational display window 500 may also include a horizontal situation indicator (HSI 502) for a VTOL. The example navigational display window 500 may be generated by the navigational display controller 204 for display on a display device (such as display/UI 114 and/or display device 202).

Example navigational aids for the navigational display window 500 may include a landing target symbol 504 that represents an intended landing location (e.g., vertiport, helipad) at which the aircraft is intended to come to zero speed (i.e., reach a full stop) before touching down, a real time stop indicator 506 that indicates where the aircraft will stop if the current deceleration rate is maintained, and a hover height symbol 508 that provides an indication of the approach altitude the aircraft must maintain relative to the intended landing location before beginning to descend down to land. There may be buildings or other approach obstacles that may need to be cleared before the aircraft reaches the intended landing location. The hover height symbol 508 provides an indication as to the height the aircraft must maintain at a minimum relative to the landing area as it approaches the intended landing location to clear the approach obstacles.

FIG. 5B is a diagram depicting an example hover height symbol 508, according to various embodiments. The example hover height symbol 508 includes a top 510 and a stem 512. The stem 512 has a length L that is proportional to the required hover height the aircraft must maintain at a minimum relative to the intended landing location. As the altitude of the aircraft decreases during an approach process , the length L of the stem 512 indicates the minimum hover height. In this example, the top 510 has a circular shape. In other embodiments, the top 510 may have a different shape, such as oval, rectangular, square, triangular, linear, or other.

In various embodiments, movement of the hover height symbol 508 on the navigational display window 500 is correlated with movement of the real time stop indicator 506 on the navigational display window 500, and movement of the real time stop indicator 506 on the navigational display window 500 is correlated with movement of the aircraft. In various embodiments, the hover height symbol 508 is fixed to the real time stop indicator 506 on the navigational display window 500, and movement of the real time stop indicator 506 on the navigational display window 500 is correlated with movement of the aircraft. These symbols on the navigational display window 500 can simplify VTOL vehicle operations by reducing mental workload for a pilot or flight crew member, particularly during final approach landing operations.

Referring back to FIG. 5A, the example HSI 502 is embedded with a two-dimensional (2-D) map display of the aircraft's anticipated flight path. The example HSI 502 includes an aircraft icon 514 representative of the aircraft, an instantaneous approach vector 516 that is calculated (e.g., based on the speed/acceleration/turn rate of the aircraft), a landing target symbol 518 that represents the intended landing location, and a real time stop indicator 520 that indicates where the aircraft will stop if the current deceleration rate is maintained. These symbols and icons on the HSI 502 can simplify VTOL vehicle operations by reducing mental workload for a pilot or flight crew member, particularly during final approach landing operations.

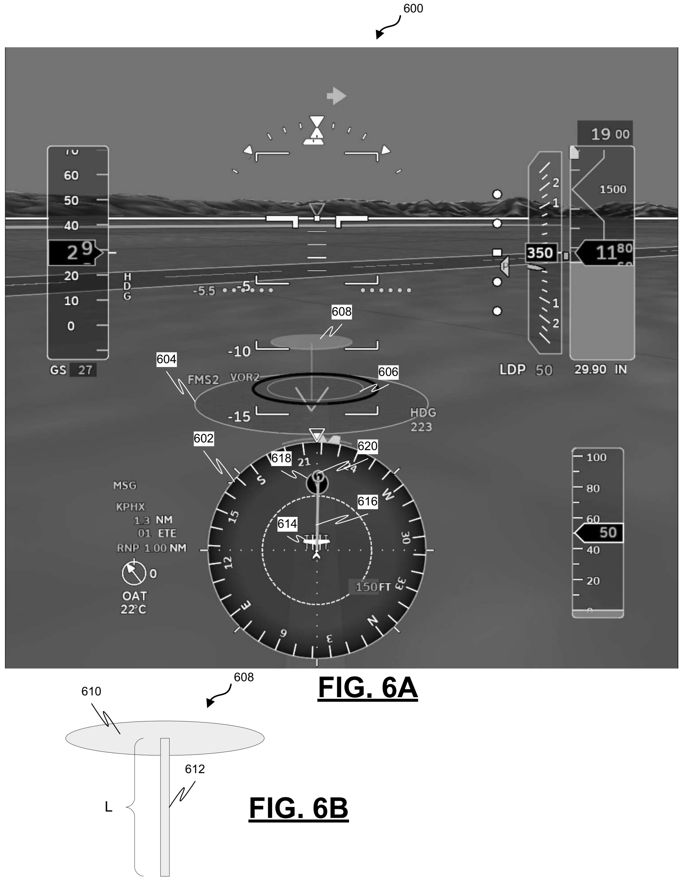

FIG. 6A is a diagram depicting another example navigational display window 600 for a VTOL vehicle, according to various embodiments. The example navigational display window 600 is configured to provide a view of an environment in front of an aircraft that is overlaid with various navigational aids. In various embodiments, the navigational display window 600 may include a three-dimensional (3-D) synthetic view window that provides a 3-D view of the environment in front of the aircraft. The navigational display window 600 may also include a horizontal situation indicator (HSI 602) for a VTOL. The example navigational display window 600 may be generated by the navigational display controller 204 for display on a display device (such as display/UI 114 and/or display device 202).

Example navigational aids for the navigational display window 600 may include a landing target symbol 604 that represents an intended landing location (e.g., vertiport, helipad) at which the aircraft is intended to come to zero speed (i.e., reach a full stop) before touching down, a real time stop indicator 606 that indicates where the aircraft will stop if the current deceleration rate is maintained, and a hover height symbol 608 that provides an indication of the approach altitude the aircraft must maintain relative to the intended landing location before beginning to descend down to land. There may be buildings or other approach obstacles that may need to be cleared before the aircraft reaches the intended landing location. The hover height symbol 608 provides an indication as to the height the aircraft must maintain relative to the landing location as it approaches the intended landing location to clear the approach obstacles.

FIG. 6B is a diagram depicting an example hover height symbol 608, according to various embodiments. The example hover height symbol 608 includes a top 610 and a stem 612. The stem 612 has a length L that is proportional to the required hover height the aircraft must maintain at a minimum relative to the intended landing location. As the altitude of the aircraft decreases during an approach process , the length L of the stem 612 indicates the minimum hover height. In this example, the top 610 has a circular shape. In other embodiments, the top 610 may have a different shape, such as oval, rectangular, square, triangular, linear, or other.

In various embodiments, the hover height symbol 608 is referenced with respect to the landing target symbol 604 and its movement on the navigational display window 600 is correlated with movement of the landing target symbol 604 on the navigational display window 600. In various embodiments, the hover height symbol 608 is fixed on the landing target symbol 604 and moves on the navigational display window 600 with movement of the landing target symbol 604 on the navigational display window 600. These symbols on the navigational display window 600 can simplify VTOL vehicle operations by reducing mental workload for a pilot or flight crew member, particularly during final approach landing operations.

Referring back to FIG. 6A, the example HSI 602 is embedded with a two-dimensional (2-D) map display of the aircraft's anticipated flight path. The example HSI 602 includes an aircraft icon 614 representative of the aircraft, an instantaneous approach vector 616 that is calculated (e.g., based on the speed/acceleration/turn rate of the aircraft), a landing target symbol 618 that represents the intended landing location, and a real time stop indicator 620 that indicates where the aircraft will stop if the current deceleration rate is maintained. These symbols and icons on the HSI 602 can simplify VTOL vehicle operations by reducing mental workload for a pilot or flight crew member, particularly during final approach landing operations.

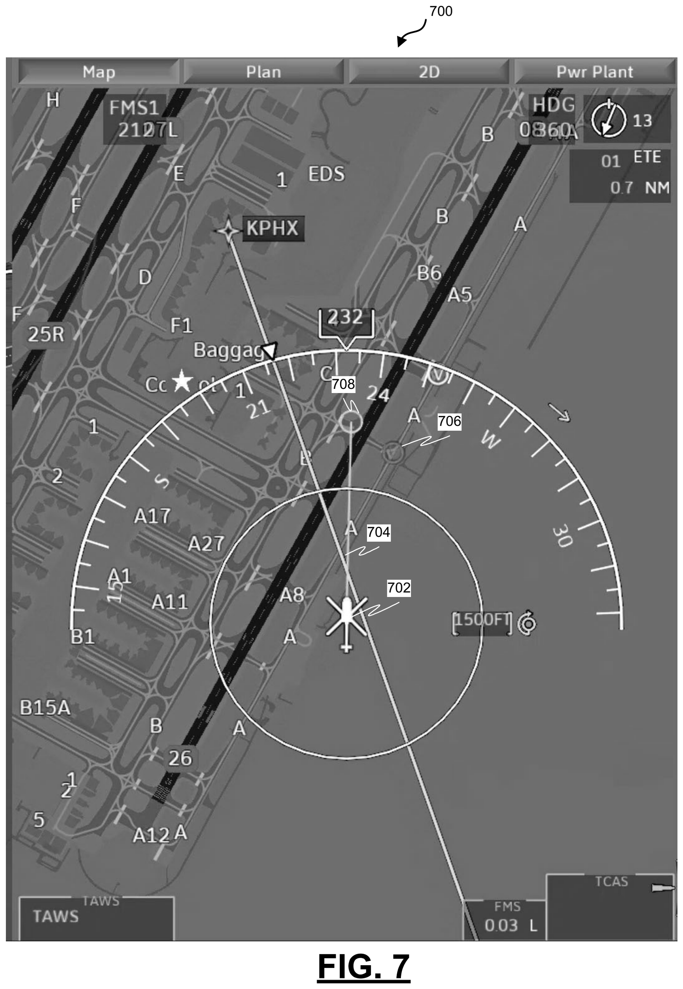

FIG. 7 is a diagram depicting an example moving map display 700 for a VTOL vehicle, according to various embodiments. The example moving map display 700 is configured to provide a moving map of an environment around an aircraft that is overlaid with various navigational aids. The example moving map display 700 may be generated by the navigational display controller 204 for display on a display device (such as display/Ul 114 and/or display device 202).

Example navigational aids for the moving map display 700 may include an aircraft icon 702 representative of the aircraft, an instantaneous approach vector 704 that is calculated (e.g., based on the speed/acceleration/turn rate of the aircraft) and indicates the direction to which the aircraft is pointed, a landing target symbol 706 that represents an intended landing location (e.g., vertiport, helipad) at which the aircraft is intended to come to zero speed (i.e., reach a full stop) before touching down, and a real time stop indicator 708 that indicates where the aircraft will stop if a current deceleration rate is maintained. These symbols and icons on the moving map display 700 can simplify VTOL vehicle operations by reducing mental workload for a pilot or flight crew member, particularly during final approach landing operations.

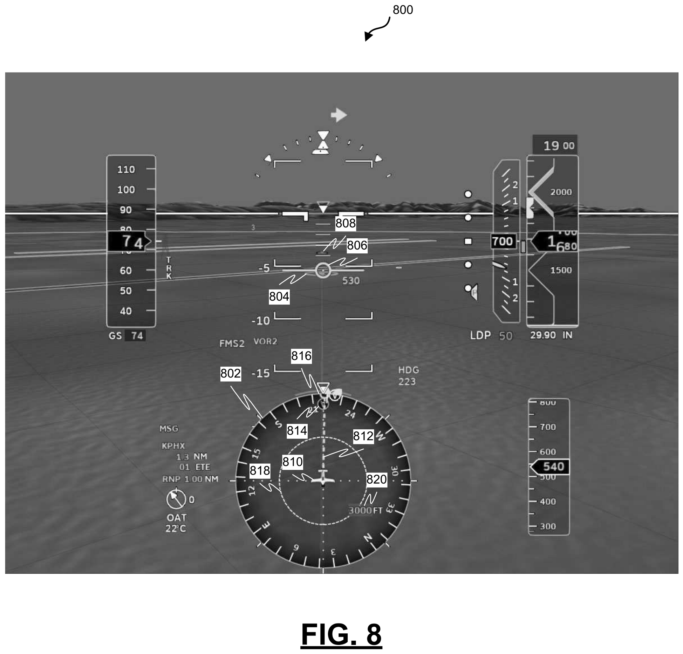

FIG. 8 is a diagram depicting another example navigational display window 800 for a VTOL vehicle, according to various embodiments. The example navigational display window 800 is configured to provide a view of an environment in front of an aircraft that is overlaid with various navigational aids. In various embodiments, the navigational display window 800 may include a three-dimensional (3-D) synthetic view window that provides a 3-D view of the environment in front of the aircraft. The navigational display window 800 may also include a horizontal situation indicator (HSI 802) for a VTOL. The example navigational display window 800 may be generated by the navigational display controller 204 for display on a display device (such as display/UI 114 and/or display device 202).

Example navigational aids for the navigational display window 800 may include a landing target symbol 804 that represents an intended landing location (e.g., vertiport, helipad) at which the aircraft is intended to come to zero speed (i.e., reach a full stop) before touching down, a flight path symbol 806 that indicates where the trajectory of the aircraft is pointing, and a real time stop indicator 808 that indicates where the aircraft will stop if a current deceleration rate is maintained.

The example HSI 802 is embedded with a two-dimensional (2-D) map display of the aircraft's anticipated flight path. The example HSI 802 includes an aircraft icon 810 representative of the aircraft, an instantaneous approach vector 812 that is calculated (e.g., based on the speed/acceleration/turn rate of the aircraft), a landing target symbol 814 that represents the intended landing location, and a real time stop indicator 816 that indicates where the aircraft will stop if the current deceleration rate is maintained. The HSI 802 further includes a concentric measurement circle 818 and an associated radius measurement 820 that together provide a scale for visualizing the distance of the aircraft from the intended landing location or a real time stopping location if a current deceleration rate is maintained.

When the real time stop indicator 816 cannot be displayed conformally with respect to the HSI 802 (e.g., due to the real time stopping location being too distant if a current deceleration rate is maintained), the real time stop indicator 816 may be parked (or caged) at a selected position past the landing target (e.g., at a position on the periphery of the HSI 802). In such circumstances, the instantaneous approach vector 812 may be displayed with a hashed line instead of a solid line as illustrated. The hashed line can provide an indication to a pilot or flight crew member that the real time stop indicator 816 cannot be displayed within the limits of the embedded map of the HSI 802 (e.g., because the aircraft is not decelerating, and the real time landing point is at infinity). The real time stop indicator 816 may, in addition or alternatively, be displayed as a flashing symbol instead of as a solidly displayed symbol to indicate that that the real time stop indicator 816 cannot be displayed within the limits of the embedded map of the HSI 802. These symbols and icons on the HSI 802 can simplify VTOL vehicle operations by reducing mental workload for a pilot or flight crew member, particularly during final approach landing operations.

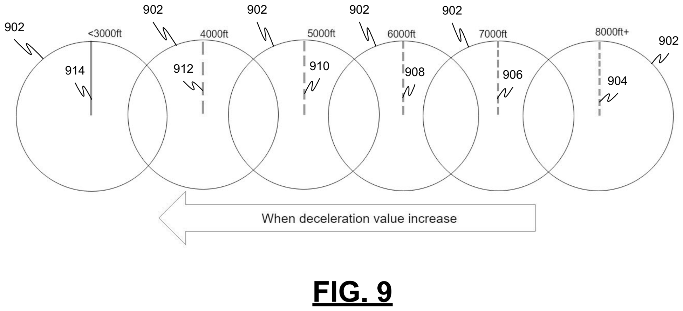

FIG. 9 is a diagram depicting example states of a real time stop indicator displayed in an HSI 902, according to various embodiments. Depicted are six example states of a real time stop indicator. In a first state, the real time stop indicator comprises a first hashed line 904 with first hashed line segments of a first length. In a second state, the real time stop indicator comprises a second hashed line 906 with second hashed line segments of a second length that are longer than the first hashed line segments. In a third state, the real time stop indicator comprises a third hashed line 908 with third hashed line segments of a third length that are longer than the second hashed line segments. In a fourth state, the real time stop indicator comprises a fourth hashed line 910 with fourth hashed line segments of a fourth length that are longer than the third hashed line segments. In a fifth state, the real time stop indicator comprises a fifth hashed line 912 with fifth hashed line segments of a fifth length that are longer than the fourth hashed line segments. In a sixth state, the real time stop indicator comprises a solid line 914. In various embodiments, the density of the hashed line segments increases as the distance to the landing point increases. In various embodiments, the density of the hashed line segments decreases as a deceleration value increases. In various embodiments, the length of the hashed line segments increases as the distance to the landing point decreases. In various embodiments, the length of the hashed line segments increases as a deceleration value increases.

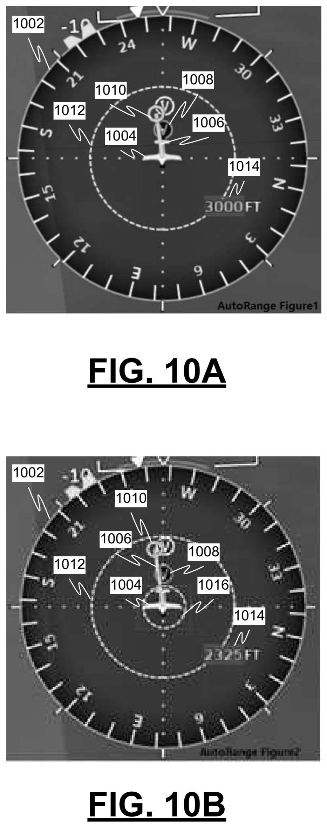

FIG. 10A is a diagram depicting an example horizontal situation indicator (HSI 1002) for a VTOL, according to various embodiments. The example HSI 1002 is embedded with a two-dimensional (2-D) map display of the aircraft's anticipated flight path. The example HSI 1002 includes an aircraft icon 1004 representative of the aircraft, an instantaneous approach vector 1006 that is calculated (e.g., based on the speed/acceleration/turn rate of the aircraft), a landing target symbol 1008 that represents the intended landing location, and a real time stop indicator 1010 that indicates where the aircraft will stop if a current deceleration rate is maintained. The HSI 1002 further includes a concentric measurement circle 1012 and an associated scaling factor 1014 that together provide a scale for visualizing the distance of the aircraft from the intended landing location or a real time stopping location if a current deceleration rate is maintained.

FIG. 10B is a diagram illustrating the application of a zoom feature to the example HSI 1002 of FIG. 10A, according to various embodiments. After the aircraft moves within a predetermined distance closer to the intended landing location, the scaling factor 1014 decreases and the distances between the aircraft icon 1004, the landing target symbol 1008, and the real time stop indicator 1010 increases as a result of the decreased scaling factor 1014 thus providing a zoom effect. A second concentric measurement circle 1016 may also be provided for display around the aircraft icon 1004 to indicate that the scaling factor 1014 has changed. In various embodiments, the embedded map in the HSI 1002 may exercise the zoom feature progressively. As the aircraft moves closer to the intended landing location, the range may zoom in (e.g., 3000 to 2325), and the second concentric measurement circle 1016 may grow as the concentric measurement circle 1012 disappears into the periphery of the HSI 1002. These symbols on the HSI 1002 can simplify VTOL vehicle operations by reducing mental workload for a pilot or flight crew member, particularly during final approach landing operations.

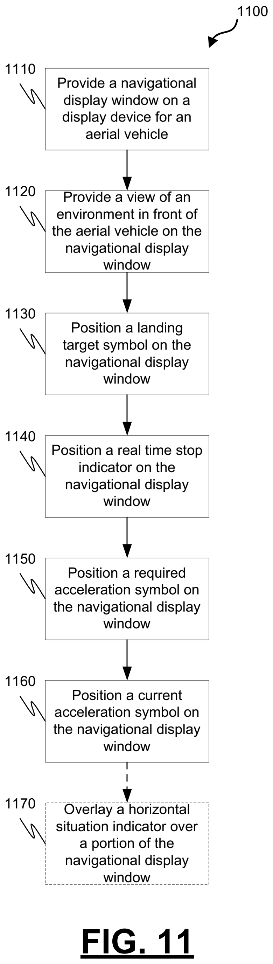

FIG. 11 is a process flow chart depicting an exemplary method 1100 in an aerial vehicle, such as a VTOL aircraft, according to various embodiments. It should be understood that the steps described herein, and the sequence in which they are presented, are merely illustrative such that additional and/or fewer steps may be included without departing from the scope of the present disclosure.

At block 1110, the method 1100 includes providing a navigational display window (e.g., navigational display window 300) on a display device for an aerial vehicle.

At block 1120, the method 1100 includes providing a view of an environment in front of the aerial vehicle on the navigational display window.

At block 1130, the method 1100 includes positioning a landing target symbol (e.g., landing target symbol 304) on the navigational display window that represents an intended landing location at which the aerial vehicle is intended to achieve a full stop before descending to land.

At block 1140, the method 1100 includes positioning a real time stop indicator (e.g., real time stop indicator 312) on the navigational display window that indicates a predicted aerial vehicle stopping point if a current deceleration rate is maintained.

At block 1150, the method 1100 includes positioning a required acceleration symbol (e.g., required acceleration bracket symbol 306) on the navigational display window that indicates a required deceleration performance to achieve the full stop above the intended landing location; and

At block 1160, the method 1100 includes positioning a current acceleration symbol (e.g., current acceleration chevron symbol 308) on the navigational display window that indicates current deceleration performance of the aerial vehicle.

In various embodiments, the method 1100 further includes positioning a flight path symbol (e.g., flight path symbol 310) on the navigational display window that indicates a trajectory of the aerial vehicle.

In various embodiments, the method 1100 (at operation 1170) further includes overlaying a horizontal situation indicator (HSI) (e.g., HSI 302) over a portion of the navigational display window wherein the HSI comprises an instantaneous approach vector (e.g., instantaneous approach vector 316), a second landing target symbol (e.g., landing target symbol 318) that represents the intended landing location, and a second real time stop indicator (e.g., real time stop indicator 320) that indicates the predicted aerial vehicle stopping point if the current deceleration rate is maintained.

In various embodiments, the method 1100 further includes overlaying a horizontal situation indicator (HSI) (e.g., HSI 802) over a portion of the navigational display window wherein the HSI comprises a real time stop indicator (e.g., 816) and an instantaneous approach vector (instantaneous approach vector 812) that is configured to be displayed as a solid line when the real time stop indicator is displayed conformally with respect to the HSI and configured to be displayed as a dashed line when the real time stop indicator is not displayed conformally with respect to the HSI.

Completion of method 1100 may result in providing an intuitive navigational display window for assisting a pilot with landing operations.

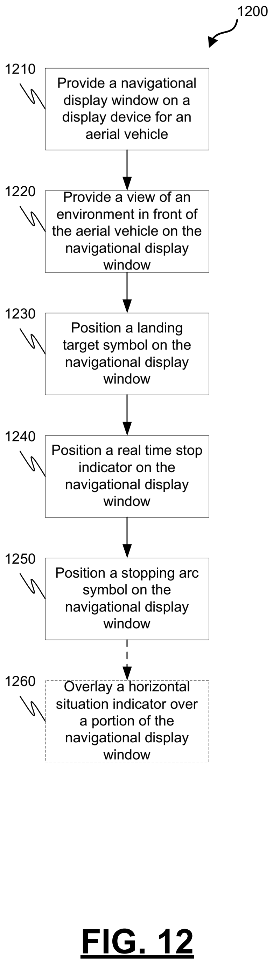

FIG. 12 is a process flow chart depicting an exemplary method 1200 in an aerial vehicle, such as a VTOL aircraft, according to various embodiments. It should be understood that the steps described herein, and the sequence in which they are presented, are merely illustrative such that additional and/or fewer steps may be included without departing from the scope of the present disclosure.

At block 1210, the method 1200 includes providing a navigational display window (e.g., navigational display window 400) on a display device for an aerial vehicle.

At block 1220, the method 1200 includes providing a view of an environment in front of the aerial vehicle on the navigational display window.

At block 1230, the method 1200 includes positioning a landing target symbol (e.g., landing target symbol 404) on the navigational display window that represents an intended landing location at which the aerial vehicle is intended to achieve a full stop before descending to land.

At block 1240, the method 1200 includes positioning a real time stop indicator (e.g., real time stop indicator 408) on the navigational display window that indicates a predicted aerial vehicle stopping point if a current deceleration rate is maintained.

At block 1250, the method 1200 includes positioning a stopping arc symbol (e.g., stopping arc symbol 410) on the navigational display window that indicates locations along an arc where the aerial vehicle will achieve the full stop if the aerial vehicle begins decelerating at a desired deceleration rate. In various embodiments, aerial vehicle deceleration using the desired deceleration rate achieves the full stop above the intended landing location when the stopping arc symbol intersects the landing target symbol.

In various embodiments, the method 1200 (at operation 1260) further includes overlaying a horizontal situation indicator (HSI) (e.g., HSI 402) over a portion of the navigational display window. In various embodiments, the HSI comprises: an instantaneous approach vector (e.g., instantaneous approach vector 414), a second landing target symbol (e.g., landing target symbol 416) that represents the intended landing location, a second real time stop indicator (e.g., real time stop indicator 418) that indicates the predicted aerial vehicle stopping point if the current deceleration rate is maintained, and a stopping arc symbol (e.g., stopping arc symbol 420) that indicates locations along an arc where the aerial vehicle will achieve the full stop if the aerial vehicle begins decelerating at a desired deceleration rate. In various embodiments, aerial vehicle deceleration using the desired deceleration rate achieves the full stop above the intended landing location when the stopping arc symbol intersects the landing target symbol.

In various embodiments, the method 1200 further includes overlaying a horizontal situation indicator (HSI) (e.g., HSI 802) over a portion of the navigational display window wherein the HSI comprises a real time stop indicator (e.g., 816) and an instantaneous approach vector (instantaneous approach vector 812) that is configured to be displayed as a solid line when the real time stop indicator is displayed conformally with respect to the HSI and configured to be displayed as a dashed line when the real time stop indicator is not displayed conformally with respect to the HSI.

Completion of method 1200 may result in providing an intuitive navigational display window for assisting a pilot with landing operations.

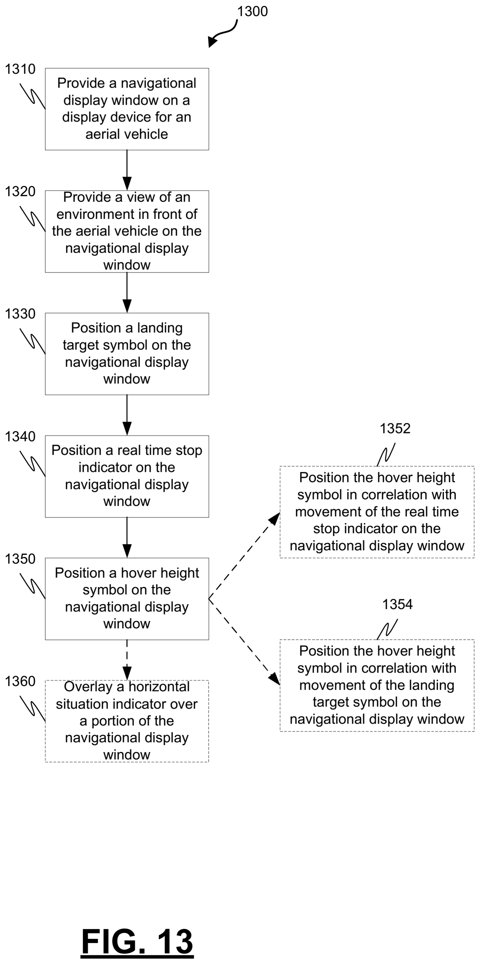

FIG. 13 is a process flow chart depicting an exemplary method 1300 in an aerial vehicle, such as a VTOL aircraft, according to various embodiments. It should be understood that the steps described herein, and the sequence in which they are presented, are merely illustrative such that additional and/or fewer steps may be included without departing from the scope of the present disclosure.

At block 1310, the method 1300 includes providing a navigational display window (e.g., navigational display window 500 or navigational display window 600) on a display device for an aerial vehicle.

At block 1320, the method 1300 includes providing a view of an environment in front of the aerial vehicle on the navigational display window.

At block 1330, the method 1300 includes positioning a landing target symbol (e.g., landing target symbol 504 or landing target symbol 604) on the navigational display window that represents an intended landing location at which the aerial vehicle is intended to achieve a full stop before descending to land.

At block 1340, the method 1300 includes positioning a real time stop indicator (e.g., real time stop indicator 506 or real time stop indicator 606) on the navigational display window that indicates a predicted aerial vehicle stopping point if a current deceleration rate is maintained.

At block 1350, the method 1300 includes positioning a hover height symbol (e.g., hover height symbol 508 or hover height symbol 608) on the navigational display window that provides an indication of an approach altitude the aerial vehicle must maintain relative to the intended landing location as it approaches the intended landing location to clear an approach obstacle before beginning to descend down to land at the intended landing location.

In various embodiments, positioning the hover height symbol comprises (at operation 1352) positioning the hover height symbol (e.g., hover height symbol 508) on the navigational display window in correlation with movement of the real time stop indicator on the navigational display window. In various embodiments, positioning the hover height symbol comprises (at operation 1354) positioning the hover height symbol (e.g., hover height symbol 608) on the navigational display window in correlation with movement of the landing target symbol on the navigational display window.

In various embodiments, the method 1300 (at operation 1360) further includes overlaying a horizontal situation indicator (HSI) (e.g., HSI 802) over a portion of the navigational display window wherein the HSI comprises a real time stop indicator (e.g., 816) and an instantaneous approach vector (instantaneous approach vector 812) that is configured to be displayed as a solid line when the real time stop indicator is displayed conformally with respect to the HSI and configured to be displayed as a dashed line when the real time stop indicator is not displayed conformally with respect to the HSI.

Completion of method 1300 may result in providing an intuitive navigational display window for assisting a pilot with landing operations.

In some aspects, the techniques described herein relate to a system for providing a navigational display for an aerial vehicle, including: a display device for the aerial vehicle; and a controller configured to generate a navigational display window configured to assist with landing operations, the navigational display window configured to display on the display device: a view of an environment in front of the aerial vehicle; a landing target symbol that represents an intended landing location at which the aerial vehicle is intended to achieve a full stop above the intended landing location; and a real time stop indicator that indicates a predicted aerial vehicle stopping point if a current deceleration rate is maintained.

In some aspects, the techniques described herein relate to a system, wherein the navigational display window is further configured to display: a required acceleration symbol that indicates a required deceleration performance to achieve the full stop above the intended landing location; and a current acceleration symbol that indicates current deceleration performance of the aerial vehicle.

In some aspects, the techniques described herein relate to a system, wherein the navigational display window is further configured to display a flight path symbol that indicates a trajectory of the aerial vehicle.

In some aspects, the techniques described herein relate to a system, wherein the navigational display window is further configured to display a horizontal situation indicator (HSI) overlaying a portion of the view of the environment and wherein the HSI includes an instantaneous approach vector, a second landing target symbol that represents the intended landing location, and a second real time stop indicator that indicates the predicted aerial vehicle stopping point if the current deceleration rate is maintained.

In some aspects, the techniques described herein relate to a system, wherein the navigational display window is further configured to display a stopping arc symbol that indicates locations along an arc where the aerial vehicle will achieve the full stop if the aerial vehicle begins decelerating at a desired deceleration rate.

In some aspects, the techniques described herein relate to a system, wherein aerial vehicle deceleration using the desired deceleration rate will achieve the full stop above the intended landing location when the stopping arc symbol intersects the landing target symbol.

In some aspects, the techniques described herein relate to a system, wherein the navigational display window is further configured to display a horizontal situation indicator (HSI) overlaying a portion of the view of the environment and wherein the HSI includes: an instantaneous approach vector; a second landing target symbol that represents the intended landing location; a second real time stop indicator that indicates the predicted aerial vehicle stopping point if the current deceleration rate is maintained; and a stopping arc symbol that indicates locations along an arc where the aerial vehicle will achieve the full stop if the aerial vehicle begins decelerating at a desired deceleration rate.

In some aspects, the techniques described herein relate to a system, wherein aerial vehicle deceleration using the desired deceleration rate will achieve the full stop above the intended landing location when the stopping arc symbol intersects the landing target symbol.

In some aspects, the techniques described herein relate to a system, wherein the navigational display window is further configured to display a hover height symbol that provides an indication of an approach altitude the aerial vehicle must maintain relative to the intended landing location as it approaches the intended landing location to clear an approach obstacle before beginning to descend down to land at the intended landing location.

In some aspects, the techniques described herein relate to a system, wherein movement of the hover height symbol on the navigational display window is correlated with movement of the real time stop indicator on the navigational display window.

In some aspects, the techniques described herein relate to a system, wherein movement of the hover height symbol on the navigational display window is correlated with movement of the landing target symbol on the navigational display window.

In some aspects, the techniques described herein relate to a system, wherein the navigational display window includes a moving map display.

In some aspects, the techniques described herein relate to a system, wherein the navigational display window includes a three-dimensional (3-D) synthetic view display.

In some aspects, the techniques described herein relate to a system, wherein the navigational display window includes a horizontal situation indicator (HSI) overlaying a portion of the view of the environment wherein the HSI includes a real time stop indicator and an instantaneous approach vector that is configured to be displayed as a solid line when the real time stop indicator is displayed conformally with respect to the HSI and configured to be displayed as a dashed line when the real time stop indicator is not displayed conformally with respect to the HSI.

In some aspects, the techniques described herein relate to a method, including: providing a navigational display window on a display device for an aerial vehicle; providing a view of an environment in front of the aerial vehicle on the navigational display window; positioning a landing target symbol on the navigational display window that represents an intended landing location at which the aerial vehicle is intended to achieve a full stop before descending to land; and positioning a real time stop indicator on the navigational display window that indicates a predicted aerial vehicle stopping point if a current deceleration rate is maintained.

In some aspects, the techniques described herein relate to a method, further including: positioning a required acceleration symbol on the navigational display window that indicates a required deceleration performance to achieve the full stop above the intended landing location; and positioning a current acceleration symbol on the navigational display window that indicates current deceleration performance of the aerial vehicle.

In some aspects, the techniques described herein relate to a method, further including: positioning a flight path symbol on the navigational display window that indicates a trajectory of the aerial vehicle.

In some aspects, the techniques described herein relate to a method, further including: overlaying a horizontal situation indicator (HSI) over a portion of the navigational display window wherein the HSI includes an instantaneous approach vector, a second landing target symbol that represents the intended landing location, and a second real time stop indicator that indicates the predicted aerial vehicle stopping point if the current deceleration rate is maintained.

In some aspects, the techniques described herein relate to a method, further including: positioning a stopping arc symbol on the navigational display window that indicates locations along an arc where the aerial vehicle will achieve the full stop if the aerial vehicle begins decelerating at a desired deceleration rate; wherein aerial vehicle deceleration using the desired deceleration rate achieves the full stop above the intended landing location when the stopping arc symbol intersects the landing target symbol.

In some aspects, the techniques described herein relate to a method, further including: overlaying a horizontal situation indicator (HSI) over a portion of the navigational display window wherein the HSI includes: an instantaneous approach vector; a second landing target symbol that represents the intended landing location; a second real time stop indicator that indicates the predicted aerial vehicle stopping point if the current deceleration rate is maintained; and a stopping arc symbol that indicates locations along an arc where the aerial vehicle will achieve the full stop if the aerial vehicle begins decelerating at a desired deceleration rate; wherein aerial vehicle deceleration using the desired deceleration rate achieves the full stop above the intended landing location when the stopping arc symbol intersects the landing target symbol.

In some aspects, the techniques described herein relate to a method, further including: positioning a hover height symbol on the navigational display window that provides an indication of an approach altitude the aerial vehicle must maintain relative to the intended landing location as it approaches the intended landing location to clear an approach obstacle before beginning to descend down to land at the intended landing location.

In some aspects, the techniques described herein relate to a method, further including: positioning the hover height symbol on the navigational display window in correlation with movement of the real time stop indicator on the navigational display window.

In some aspects, the techniques described herein relate to a method, further including: positioning the hover height symbol on the navigational display window in correlation with movement of the landing target symbol on the navigational display window.

In some aspects, the techniques described herein relate to a method, further including: overlaying a horizontal situation indicator (HSI) over a portion of the navigational display window wherein the HSI includes a real time stop indicator and an instantaneous approach vector that is configured to be displayed as a solid line when the real time stop indicator is displayed conformally with respect to the HSI and configured to be displayed as a dashed line when the real time stop indicator is not displayed conformally with respect to the HSI.

In some aspects, the techniques described herein relate to a system for providing a landing position display for a vertical takeoff and landing aircraft (VTOL aircraft), including: a display device in a cockpit of the VTOL aircraft; and a synthetic view window configured for display on the display device, the synthetic view window configured to display: a 3-D synthetic view display of a flight path for the VTOL aircraft; a 2-D map display of the flight path for the VTOL aircraft overlaid over a portion of the 3-D synthetic view display; a stopping arc symbol on the 3-D synthetic view display that indicates a stopping radius for the VTOL aircraft if deceleration were initiated at a planned deceleration rate; a second stopping arc symbol on the 2-D map display that indicates a stopping radius for the VTOL aircraft if deceleration were initiated at the planned deceleration rate; a landing target symbol positioned on the 3-D synthetic view display that indicates a target landing location; and a second landing target symbol positioned on the 2-D map display that indicates the target landing location; wherein an intersection of the stopping arc symbol with the landing target symbol provides an indication to begin deceleration using the planned deceleration rate.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
providing a navigational display window on a display device for an aerial vehicle;
providing a view of an environment in front of the aerial vehicle on the navigational display window;
positioning a landing target symbol on the navigational display window that represents an intended landing location at which the aerial vehicle is intended to achieve a full stop before descending to land; and
positioning a real time stop indicator on the navigational display window that indicates a predicted aerial vehicle stopping point if a current deceleration rate is maintained.

2. The method of claim 1, further comprising:
positioning a required acceleration symbol on the navigational display window that indicates a required deceleration performance to achieve the full stop above the intended landing location; and
positioning a current acceleration symbol on the navigational display window that indicates current deceleration performance of the aerial vehicle.

3. The method of claim 1, further comprising:
positioning a flight path symbol on the navigational display window that indicates a trajectory of the aerial vehicle.

4. The method of claim 1, further comprising:
overlaying a horizontal situation indicator (HSI) over a portion of the navigational display window wherein the HSI comprises an instantaneous approach vector, a second landing target symbol that represents the intended landing location, and a second real time stop indicator that indicates the predicted aerial vehicle stopping point if the current deceleration rate is maintained.

5. The method of claim 1, further comprising:
positioning a stopping arc symbol on the navigational display window that indicates locations along an arc where the aerial vehicle achieves the full stop if the aerial vehicle begins decelerating at a desired deceleration rate;
wherein aerial vehicle deceleration using the desired deceleration rate achieves the full stop above the intended landing location when the stopping arc symbol intersects the landing target symbol.

6. The method of claim 1, further comprising:
overlaying a horizontal situation indicator (HSI) over a portion of the navigational display window wherein the HSI comprises:
an instantaneous approach vector;
a second landing target symbol that represents the intended landing location;
a second real time stop indicator that indicates the predicted aerial vehicle stopping point if the current deceleration rate is maintained; and
a stopping arc symbol that indicates locations along an arc where the aerial vehicle achieves the full stop if the aerial vehicle begins decelerating at a desired deceleration rate;
wherein aerial vehicle deceleration using the desired deceleration rate achieves the full stop above the intended landing location when the stopping arc symbol intersects the landing target symbol.

7. The method of claim 1, further comprising:
positioning a hover height symbol on the navigational display window that provides an indication of an approach altitude the aerial vehicle must maintain relative to the intended landing location as it approaches the intended landing location to clear an approach obstacle before beginning to descend down to land at the intended landing location.

8. The method of claim 7, further comprising:
positioning the hover height symbol on the navigational display window in correlation with movement of the real time stop indicator on the navigational display window.

9. The method of claim 7, further comprising:
positioning the hover height symbol on the navigational display window in correlation with movement of the landing target symbol on the navigational display window.

10. The method of claim 1, further comprising:
overlaying a horizontal situation indicator (HSI) over a portion of the navigational display window wherein the HSI comprises a real time stop indicator and an instantaneous approach vector that is configured to be displayed as a solid line when the real time stop indicator is displayed conformally with respect to the HSI and configured to be displayed as a dashed line when the real time stop indicator is not displayed conformally with respect to the HSI.

11. A system for providing a navigational display for an aerial vehicle, comprising:
a display device for the aerial vehicle; and
a controller configured to generate a navigational display window configured to assist with landing operations, the navigational display window configured to display on the display device:
a view of an environment in front of the aerial vehicle;
a landing target symbol that represents an intended landing location at which the aerial vehicle is intended to achieve a full stop above the intended landing location; and
a real time stop indicator that indicates a predicted aerial vehicle stopping point if a current deceleration rate is maintained.

12. The system according to claim 1, wherein the navigational display window is further configured to display:
a required acceleration symbol that indicates a required deceleration performance to achieve the full stop above the intended landing location;
a current acceleration symbol that indicates current deceleration performance of the aerial vehicle; and
a flight path symbol that indicates a trajectory of the aerial vehicle.

13. The system according to claim 1, wherein the navigational display window is further configured to display a horizontal situation indicator (HSI) overlaying a portion of the view of the environment and wherein the HSI comprises an instantaneous approach vector, a second landing target symbol that represents the intended landing location, and a second real time stop indicator that indicates the predicted aerial vehicle stopping point if the current deceleration rate is maintained.

14. The system according to claim 1, wherein the navigational display window is further configured to display a horizontal situation indicator (HSI) overlaying a portion of the view of the environment and wherein the HSI comprises:
an instantaneous approach vector;
a second landing target symbol that represents the intended landing location;
a second real time stop indicator that indicates the predicted aerial vehicle stopping point if the current deceleration rate is maintained; and
a stopping arc symbol that indicates locations along an arc where the aerial vehicle achieves the full stop if the aerial vehicle begins decelerating at a desired deceleration rate, wherein aerial vehicle deceleration using the desired deceleration rate achieves the full stop above the intended landing location when the stopping arc symbol intersects the landing target symbol.

15. The system according to claim 1, wherein the navigational display window is further configured to display a hover height symbol that provides an indication of an approach altitude the aerial vehicle must maintain relative to the intended landing location as it approaches the intended landing location to clear an approach obstacle before beginning to descend down to land at the intended landing location.
